# EUROPEAN PATENT SPECIFICATION

(11) **EP 2 744 060 B1**
(45) Date of publication and mention of the grant of the patent: **03.10.2018**
(21) Application number: 13195273.1
(22) Date of filing: 02.12.2013
(51) Int. Cl.: H02G 15/007

(54) **Strain relief element and method of producing electrical installation accessories**
Zugentlastungselement und Verfahren zur Produktion von Elektroinstallationszubehör
Élément de décharge de traction et procédé de production d'un tel accessoire

(30) Priority: 13.12.2012 FI 20126301
(43) Date of publication of application: 18.06.2014
(73) Proprietor: ABB Schweiz AG, 5400 Baden (CH)
(72) Inventor: Andersson, Johan, 06100 Porvoo (FI); Didriksson, Lars, 06100 Porvoo (FI); Tervo, Pekka, 06100 Porvoo (FI)
(74) Representative: Kolster Oy Ab

(56) References cited:
- EP-A1- 0 753 918
- EP-A1- 1 231 693
- WO-A1-2005/081374
- DE-A1- 10 011 341
- US-A- 4 641 863
- US-A- 5 702 076
- US-A- 6 073 890
- US-A1- 2011 154 940
- Obo Bettermann: "VBS Catalogue 2010/2011 Connection and fastening systems", , 31 December 2011 (2011-12-31), XP055289115, Retrieved from the Internet: URL:http://www.bettermann.de/downloads/en/ kataloge/vbs_rohre_en.pdf [retrieved on 2016-07-18]

## Description

### FIELD OF THE INVENTION

The invention relates to a strain relief element, an electrical installation accessory, and a method of producing an electrical installation accessory.

### BACKGROUND OF THE INVENTION

In installation of electric lines, strain reliefs are used for instance when strain caused by the weight of an electric line or another force applied thereto is to be prevented from being further applied to a connection of the electric line. For instance in pipeless installation of electric lines, when inserting an electric line into a junction box or a mounting box, an electric line inlet to the box is typically to be provided with a strain relief.

The junction and mounting boxes may comprise specific separate stub parisons to which a specific pipeless electrical installation strain relief stub may be fastened. Such a separate stub parison may comprise e.g. grooves into which lugs provided in the edges of the strain relief stub may be slid, thus fastening the strain relief stub to the box.

A problem with the above-described solution is that different box models may have different separate stub parisons, each thereof requiring a strain relief stub of a certain type, i.e. a certain strain relief stub is possibly appropriate only for a certain box. In addition, the number of separate stub parisons in the box may be rather limited, in which case no sufficient number of strain relief stubs can be fastened to the box.

EP 753918 discloses a lead-in element for insertion of a cable or tube into an electric box. The disclosed lead-in element can be attached to the electric box with threaded parts which engage corresponding threads in an opening of the box. Also this solution has the problem that the disclosed lead-in element requires an electric box with specific openings provided with corresponding specific threads to engage the threads in the lead-in element.

DE10011341 discloses an electrical connector plug that has a cylindrical main body into which the cable is fixed. The cable is protected against an axial load by a strain relief element. The fixing of the strain relief element in the connector is done by a threaded nut.

US5702076 discloses an insulator for mounting pipe in metal wall stud. The body of the insulator comprises a flange in order to fix the correct position when the insulator is inserted into the wall stud.

US4641863 discloses a connector for coupling a conduit to a junction box. In particular it discloses a set screw connector.

### BRIEF DESCRIPTION OF THE INVENTION

An object of the invention is to provide a device so as to enable the aforementioned problem to be solved or at least alleviated. The object of the invention is achieved by a strain relief element, an electrical installation accessory and a method which are characterized by what is stated in independent claim 1. Preferred embodiments of the invention are disclosed in the dependent claims.

The idea underlying the invention is that the strain relief element is arranged to be inserted into an electrical installation pipe connector and to be fastened thereto and to prevent movement of an electric line pushed through the strain relief element against a direction in which the strain relief element is inserted into the electrical installation pipe connector.

An advantage of the solution according to the invention is that the solution enables the strain relief to be fastened to any electrical installation pipe connector designed for a certain pipe size, thus enabling e.g. in the junction or mounting box the strain relief to be fastened not only to a separate stub parison but also to a fixed stub provided with an electrical installation pipe connector. This enables a greater number of line inlets of the box to be provided with a strain relief. Further, the strain relief element according to the invention may be used e.g. for providing an extension sleeve of an electrical installation pipe or a corresponding electrical installation accessory with a strain relief. The strain relief element according to the invention is also easy to mount in the electrical installation pipe connector since it may be installed by pushing into the electrical installation pipe connector.

### BRIEF DESCRIPTION OF THE FIGURES

The invention is now described in closer detail in connection with the preferred embodiments and with reference to the accompanying drawings, in which
Figure 1 shows an example of a strain relief element according to an embodiment;
Figure 2 shows an example of a strain relief element according to an embodiment;
Figure 3 shows an example of a strain relief element according to an embodiment;
Figure 4 shows an example of a strain relief element according to an embodiment;
Figure 5 shows an example of a strain relief element according to an embodiment;
Figure 6 shows an example of joining a strain relief element to an electrical installation box according to an embodiment;
Figure 7 shows an example of an electrical installation accessory according to an embodiment;
Figure 8 shows an example of joining a strain relief element to a separate stub according to an embodiment;
Figure 9 shows an example of joining a strain relief element to an extension sleeve according to an embodiment; and
Figure 10 shows an example of a strain relief element according to an embodiment.

### DETAILED DESCRIPTION OF THE INVENTION

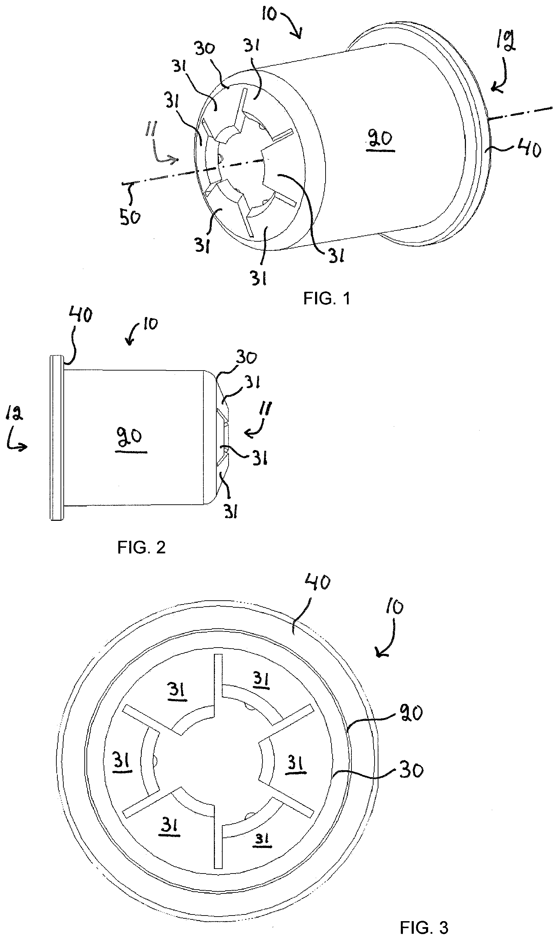

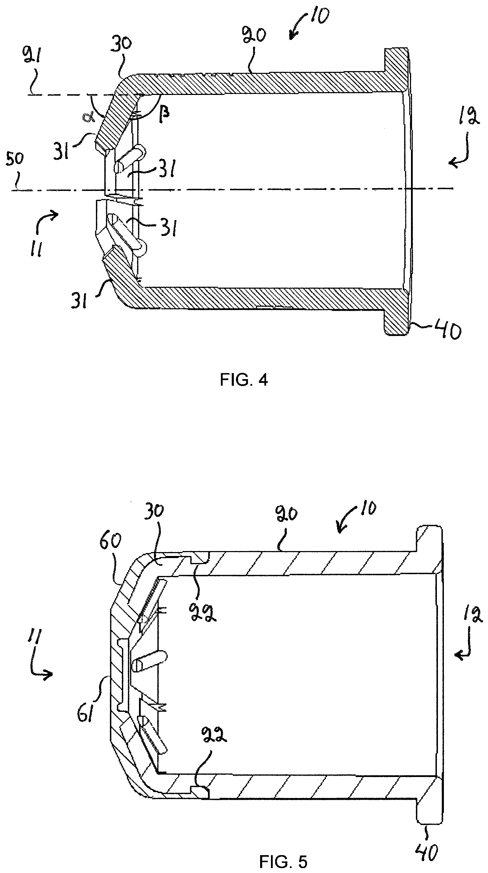

Figure 1 shows an example of a strain relief element 10 according to the invention. Figure 2 is a side view showing the strain relief element 10 corresponding to Figure 1, Figure 3 is an end view showing the strain relief element corresponding to Figure 1, and Figure 4 is a cross-sectional side view showing the strain relief element corresponding to Figure 1. The strain relief element 10 has a front end 11 and a rear end 12. The strain relief element 10 further comprises a tubular body part 20 and strain relief means 30. Preferably, the strain relief means 30 are arranged to engage to an electric line (not shown in the figures) to be pushed through the strain relief element 10 in a direction from the rear end 12 to the front end 11, and to prevent movement of the electric line through the strain relief element 10 in a direction from the front end 11 to the rear end 12. An electric line herein refers to any insulated or uninsulated electric line having one or more conductors, such as an electric cable. Preferably, the strain relief element 10 is arranged to be inserted, with the front end 11 ahead, into an electrical installation pipe connector and to be fastened thereto. An electrical installation pipe connector herein refers to a connector enabling an electrical installation pipe to be connected thereto. The electrical installation pipe connector may be a part of the electrical installation accessory, such as an electrical installation box, a separate stub, or a sleeve.

According to the invention, an outer surface of the body part 20 of the strain relief element 10 is substantially uniform over its entire length. In such a case, the strain relief element is more reliably fastened to fastening means of the electrical installation pipe connector, such as one or more locking springs or adhesive fastenings, which preferably engage to the outer surface of the body part 20 of the strain relief element 10 upon insertion of the strain relief element into the electrical installation pipe connector. Further, an outer diameter of the body part of the strain relief element 10 preferably substantially corresponds to an inner diameter of the electrical installation pipe connector. Accordingly, the outer diameter of the body part 20 of the strain relief element 10 may be e.g. about 16 mm, 20 mm or 25 mm, depending on the electrical installation pipe connector in connection with which the strain relief element 10 is to be used. Preferably, the length of the body part 20 of the strain relief element 10 allows the strain relief element 10 to reach and be fastened to the fastening means of the electrical installation pipe connector upon insertion of the strain relief element 10 into the electrical installation pipe connector. The necessary length depends on the electrical installation pipe connector in connection with which the strain relief element 10 is to be used.

According to an embodiment, the strain relief means 30 comprise at least one projection 31 which extends from the body part 20 substantially towards a central axis 50 of the strain relief element 10. The examples shown in Figures 1 to 4 exhibit six claw-like projections 31, but the number of projections may vary, depending on the outer diameter of the body part 20, for instance. The projections 31 may also have shapes different from those shown in the figures. The projections 31 of the strain relief means 30 may be mutually different in length, as in the examples shown in Figures 1 to 4, in which case they are more adaptive for gripping electric lines of different thicknesses. An end of the projections 31 may be bevelled or otherwise made sharp in order for them to be better fastened to the surface of the electric line. According to an embodiment, said at least one projection 31 extends from the body part 20 obliquely towards the central axis 50 of the strain relief element 10 such that an angle α between the projection 31 and a plane 21 of an inner surface of the body part 20 on a side of the projection facing the front end 11 of the strain relief element 10 is smaller than an angle β between the projection 31 and the plane 21 of the inner surface of the body part 20 on a side of the projection 31 facing the rear end 12 of the strain relief element.

According to the invention, the strain relief element 10 comprises at least one restraint part 40 located substantially at the rear end 12 and extending outwards from the body part 20. The restraint part 40 enables the strain relief element 10 to be prevented from being pushed too far into the electrical installation pipe connector. The restraint part 40 may be e.g. an annular flange whose outer diameter is larger than the outer diameter of the body part 20, as illustrated in Figures 1 to 4.

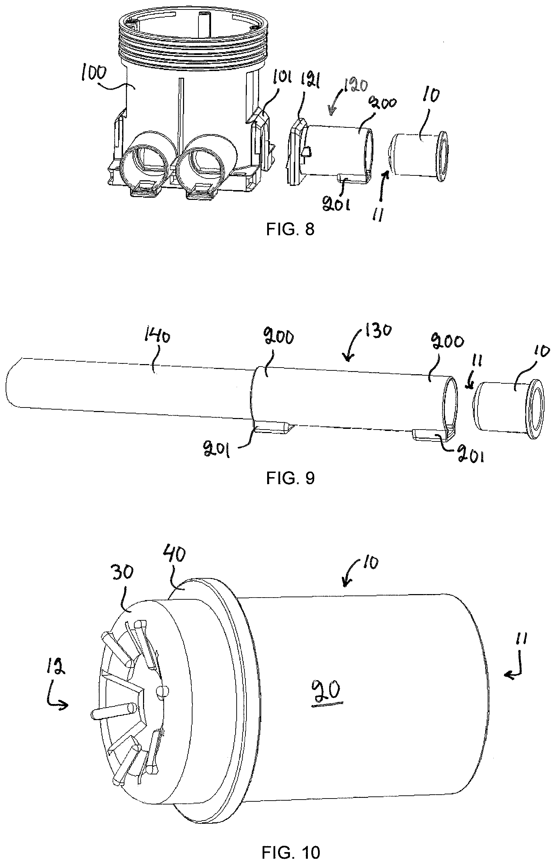

In the examples of Figures 1 to 4, the strain relief means 30 are located at the front end 11 of the strain relief element 10. However, it is possible that the strain relief means 30 are located at the rear end 12 of the strain relief element 10, as illustrated in Figure 10. Further, it is possible that the strain relief means 30 are located in the middle of the strain relief element 10.

The strain relief element 10 may be made e.g. of plastic or metal or a combination thereof, such as metal at least partly coated with plastic. Suitable plastics include polyamide and polycarbonate, for instance. The advantage of a plastic material is its electrical insulation capacity and, further, a plastic strain relief element or a strain relief element coated with plastic protects the sheath of the electric line against damage in connection with installation, for instance.

According to the invention, the strain relief element 10 comprises at least one sealing part 60. As shown in Figure 5, the sealing part 60 may comprise a membrane 61 which substantially seals an opening passing through the body part 20. The sealing part 60 may also comprise more membranes 61. Preferably, the sealing part 60 or at least the membrane 61 is made of a resilient material, such as rubber or plastic, e.g. a thermoplastic elastomer (TPE). Upon insertion of the electric line through the strain relief element 10, the membrane 61 of the sealing part 60 is punctured by an end of the electric line, and the membrane 61 winds round the electric line, thus making the inlet tight. The membrane 61 of the sealing part 60 may be located in connection with the strain relief means 30, as shown in the example of Figure 5. The sealing part 60 may also be located separately from the strain relief means 30. The sealing part 60 may engage to the strain relief element 10 e.g. by means of a groove 22 in the body 20 of the strain relief element 10, the edge of the sealing part 60 tightening into the groove 22. A strain relief element 10 with a sealing part 60 may also be manufactured by multicomponent injection moulding, for instance.

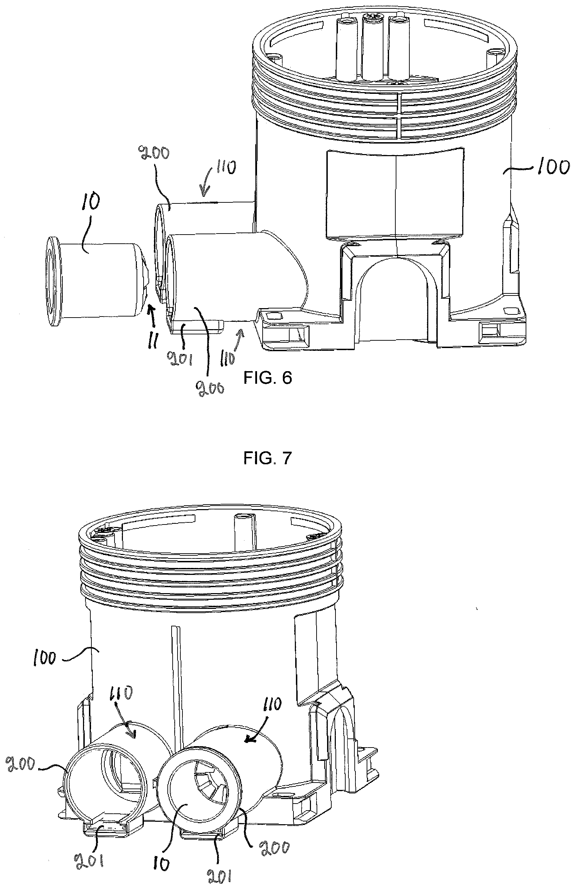

Figures 6 to 9 show examples of possible use of the strain relief element 10 in connection with various electrical installation accessories. Generally speaking, the strain relief element 10 may be used in connection with any electrical installation accessory comprising at least one electrical installation pipe connector. Such electrical installation accessories include for instance an electrical installation box, such as a junction box or a mounting box, a separate stub, and a sleeve, such as an extension sleeve or a pipe adaptor.

The example of Figure 6 shows an electrical installation box 100 comprising two fixed stubs 110, each thereof comprising an electrical installation pipe connector 200. The electrical installation pipe connector 200 provided in the fixed stub 110 further comprises appropriate fastening means, such as a locking spring 201 according to the example of the figure for fastening the electrical installation pipe. An adhesive fastening is also a feasible alternative. Further, the strain relief element 10 shown in Figure 6 is arranged to be inserted, with the front end 11 ahead, into the electrical installation pipe connector 200 provided in the fixed stub 110 and to be fastened thereto. Figure 7 shows an electrical installation box 100 wherein the strain relief element 10 is inserted, with the front end 11 ahead, into the electrical installation pipe connector 200 provided in one fixed stub 110 of the electrical installation box 100 such that the strain relief element 10 becomes fastened in place by means of the locking spring 201.

The example of Figure 8 shows an electrical installation box 100 comprising a separate stub parison 101 enabling a separate stub 120 to be fastened thereto by means of lugs 121 provided therein. The separate stub 120, in turn, comprises an electrical installation pipe connector 200 and fastening means 201 provided therein. The strain relief element 10 shown in Figure 8 may be inserted, with the front end 11 ahead, into the electrical installation pipe connector 200 provided in the separate stub 120 such that the strain relief element 10 is fastened to the electrical installation pipe connector 200 by means of the fastening means 201.

The example of Figure 9 shows an extension sleeve 130 whose both ends are provided with an electrical installation pipe connector 200. In the example of the figure, an electrical installation pipe 140 is inserted into one electrical installation pipe connector 200. The strain relief element 10 shown in Figure 9 may be inserted, with the front end 11 ahead, into the other electrical installation pipe connector 200 of the extension sleeve 130 such that the strain relief element 10 is fastened to the electrical installation pipe connector 200 by means of the fastening means 201.

It will be apparent to a person skilled in the art that as technology advances, the basic idea of the invention may be implemented in many different ways. The invention and its embodiments are thus not restricted to the examples described above but may vary within the scope of the claims.

## Claims

1. An electrical installation accessory comprising:
at least one electrical installation pipe connector (200); and
at least one strain relief element (10) having a front end (11) and a rear end (12) and comprising a tubular body part (20) an outer surface of which is substantially uniform over its entire length, wherein an outer diameter of the body part (20) substantially corresponds to an inner diameter of the electrical installation pipe connector (200) and strain relief means (30) arranged to engage to an electric line to be pushed through the strain relief element (10) in a direction from the rear end (12) to the front end (11), and to prevent movement of the electric line through the strain relief element (10) in a direction from the front end (11) to the rear end (12), the strain relief element (10) being arranged to be inserted, with the front end (11) ahead, into an electrical installation pipe connector (200) and to be fastened thereto, wherein the strain relief element (10) is inserted, with a front end (11) ahead, into the electrical installation pipe connector (200) such that the strain relief element (10) is fastened to the electrical installation pipe connector (200) **characterized in that** the outer diameter of the tubular body part (20) is about 16mm, 20mm or 25mm, and that the strain relief element (10) comprises at least one restraint part (40) located at the rear end and extending outwards from the body part (20) of the strain relief element (10), the restraint part (40) being an annular flange whose outer diameter is larger than the outer diameter of the body part (20) of the strain relief element (10), and that the strain relief element (10) comprises at least one sealing part (60), which comprises at least one membrane (61), which is made of a resilient material and substantially seals an opening passing through the body part (20) of the strain relief element (10), the membrane (61) being located in connection with the strain relief means (30), that the electrical installation pipe connector (200) comprises fastening means (201) which engage to the outer surface of the body part (20) of the strain relief element (10) upon insertion of the strain relief element into the electrical installation pipe connector enabling the strain relief element (10) to be fastened to the electrical installation pipe connector (200).

2. An electrical installation accessory as claimed in claim 1, wherein the strain relief means (30) comprise at least one projection (31) which extends from the body part (20) of the strain relief element (10) substantially towards a central axis (50) of the strain relief element (10).

3. An electrical installation accessory as claimed in claim 2, wherein said at least one projection (31) extends from the body part (20) of the strain relief element (10) obliquely towards the central axis (50) of the strain relief element (10) such that an angle between the projection and a plane (21) of an inner surface of the body part on a side of the projection facing the front end (11) of the strain relief element is smaller than an angle between the projection and the plane of the inner surface of the body part on a side of the projection facing the rear end (12) of the strain relief element.

4. An electrical installation accessory as claimed in any one of claims 1 to 3, wherein the electrical installation accessory (100, 120, 130) is an electrical installation box, a separate stub, or a sleeve.

## Patentansprüche

1. Elektroinstallations-Zubehörteil, das umfasst:
wenigstens einen Elektroinstallations-Rohrverbinder (200); sowie
wenigstens ein Zugentlastungs-Element (10), das ein vorderes Ende (11) sowie ein hinteres Ende (12) hat und einen röhrenförmigen Körper-Teil (20) umfasst, dessen Außenfläche im Wesentlichen über seine gesamte Länge einheitlich ist, wobei ein Außendurchmesser des Körper-Teils (20) im Wesentlichen einem Innendurchmesser des Elektroinstallations-Rohrverbinders (200) entspricht, und eine Zugentlastungs-Einrichtung (30), die so eingerichtet ist, dass sie mit einer Stromleitung in Eingriff kommt, die in einer Richtung von dem hinteren Ende (12) zu dem vorderen Ende (11) durch das Zugentlastungs-Element (10) geschoben wird, und dass sie Bewegung der Stromleitung durch das Zugentlastungs-Element (10) in einer Richtung von dem vorderen Ende (11) zu dem hinteren Ende (12) verhindert, wobei das Zugentlastungs-Element (10) so eingerichtet ist, dass es mit dem vorderen Ende (11) voraus in einen Elektroinstallations-Rohrverbinder (200) eingeführt wird und daran befestigt wird, und dass Zugentlastungs-Element mi dem vorderen Ende voraus so in den Elektroinstallations-Rohrverbinder (200) eingeführt wird, dass das Zugentlastungs-Element (10) an dem Elektroinstallations-Rohrverbinder (200) befestigt wird, **dadurch gekennzeichnet, dass** der Außendurchmesser des röhrenförmigen Körper-Teils (20) ungefähr 16 mm, 20 mm oder 25 mm beträgt, und
dass das Zugentlastungs-Element (10) wenigstens einen Rückhalte-Teil (40) umfasst, der sich an dem hinteren Ende befindet und sich von dem Körper-Teil (20) des Zugentlastungs-Elementes (10) nach außen erstreckt, wobei der Rückhalte-Teil (40) ein ringförmiger Flansch ist, dessen Außendurchmesser größer ist als der Außendurchmesser des Körper-Teils (20) des Zugentlastungs-Elementes (10), und
dass das Zugentlastungs-Element (10) wenigstens einen Dichtungs-Teil (60) umfasst, der wenigstens eine Membran (61) umfasst, die aus einem elastischen Material besteht und im Wesentlichen eine Öffnung abdichtet, die durch den Körper-Teil (20) des Zugentlastungs-Elementes (10) hindurch verläuft, wobei die Membran (61) in Verbindung mit der Zugentlastungs-Einrichtung (30) angeordnet ist,
dass der Elektroinstallations-Rohrverbinder (200) Befestigungseinrichtungen (201) umfasst, die beim Einführen des Zugentlastungs-Elementes (10) in den Elektroinstallations-Rohrverbinder (200) mit der Außenfläche des Körper-Teils (20) des Zugentlastungs-Elementes (10) so in Eingriff kommen, dass das Zugentlastungs-Element (10) an dem Elektroinstallations-Rohrverbinder (200) befestigt werden kann.

2. Elektroinstallations-Zubehörteil nach Anspruch 1, wobei
die Zugentlastungs-Einrichtung (30) wenigstens einen Vorsprung (31) umfasst, der sich von dem Körper-Teil (20) des Zugentlastungs-Elementes (10) im Wesentlichen auf eine Mittelachse (50) des Zugentlastungs-Elementes (10) zu erstreckt.

3. Elektroinstallations-Zubehörteil nach Anspruch 2, wobei
der wenigstens eine Vorsprung (31) sich von dem Körper-Teil (20) des Zugentlastungs-Elementes (10) schräg so auf die Mittelachse (50) des Zugentlastungs-Elementes (10) zu erstreckt, dass ein Winkel zwischen dem Vorsprung und einer Ebene (21) einer Innenfläche des Körper-Teils an einer dem vorderen Ende (11) des Zugentlastungs-Elementes zugewandten Seite des Vorsprungs kleiner ist als ein Winkel zwischen dem Vorsprung und der Ebene der Innenfläche des Körper-Teils an einer dem hinteren Ende (12) des Zugentlastungs-Elementes zugewandten Seite des Vorsprungs.

4. Elektroinstallations-Zubehörteil nach einem der Ansprüche 1 bis 3, wobei das Elektroinstallations-Zubehörteil (100, 120, 130) ein Elektroinstallations-Gehäuse, ein separater Stutzen, oder eine Buchse ist.

## Revendications

1. Accessoire d'installation électrique comprenant :
au moins un connecteur de conduit d'installation électrique (200) ; et
au moins un élément de soulagement de traction (10) ayant une extrémité avant (11) et une extrémité arrière (12) et comprenant une partie de corps tubulaire (20) dont une surface extérieure est sensiblement uniforme sur toute sa longueur, un diamètre extérieur de la partie de corps (20) correspondant sensiblement à un diamètre intérieur du connecteur de conduit d'installation électrique (200), et des moyens de soulagement de traction (30) étant conçus pour venir en prise avec une ligne électrique à pousser à travers l'élément de soulagement de traction (10) dans une direction allant de l'extrémité arrière (12) jusqu'à l'extrémité avant (11), et pour empêcher un déplacement de la ligne électrique à travers l'élément de soulagement de traction (10) dans une direction allant de l'extrémité avant (11) jusqu'à l'extrémité arrière (12), l'élément de soulagement de traction (10) étant conçu pour être inséré, avec l'extrémité avant (11) en tête, dans un connecteur de conduit d'installation électrique (200) et pour y être fixé, dans lequel l'élément de soulagement de traction (10) est inséré, avec une extrémité avant (11) en tête, dans le connecteur de conduit d'installation électrique (200) de telle sorte que l'élément de soulagement de contrainte (10) est fixé au connecteur de conduit d'installation électrique (200) **caractérisé en ce que** le diamètre extérieur de la partie de corps tubulaire (20) est d'environ 16 mm, 20 mm ou 25 mm, et **en ce que** l'élément de soulagement de traction (10) comprend au moins une partie de retenue (40) située à l'extrémité arrière et s'étendant vers l'extérieur depuis la partie de corps (20) de l'élément de soulagement de traction (10), la partie de retenue (40) étant une bride annulaire dont un diamètre extérieur est supérieur au diamètre extérieur de la partie de corps (20) de l'élément de soulagement de traction (10), et **en ce que** l'élément de soulagement de traction (10) comprend au moins une partie d'étanchéité (60), qui comprend au moins une membrane (61), qui est constituée d'un matériau résilient et scelle sensiblement une ouverture passant à travers la partie de corps (20) de l'élément de soulagement de traction (10), la membrane (61) étant positionnée en liaison avec les moyens de soulagement de traction (30),
**en ce que** le connecteur de conduit d'installation électrique (200) comprend des moyens de fixation (201) qui viennent en prise avec la surface extérieure de la partie de corps (20) de l'élément de soulagement de traction (10) lors de l'insertion de l'élément de soulagement de traction dans le connecteur de conduit d'installation électrique permettant à l'élément de soulagement de traction (10) d'être fixé au connecteur de conduit d'installation électrique (200).

2. Accessoire d'installation électrique selon la revendication 1, dans lequel les moyens de soulagement de traction (30) comprennent au moins une saillie (31) qui s'étend depuis la partie de corps (20) de l'élément de soulagement de traction (10) sensiblement vers un axe central (50) de l'élément de soulagement de traction (10).

3. Accessoire d'installation électrique selon la revendication 2, dans lequel ladite au moins une saillie (31) s'étend depuis la partie de corps (20) de l'élément de soulagement de traction (10) obliquement vers l'axe central (50) de l'élément de soulagement de traction (10) de sorte qu'un angle entre la saillie et un plan (21) d'une surface intérieure de la partie de corps sur un côté de la saillie faisant face à l'extrémité avant (11) de l'élément de soulagement de traction est inférieur à un angle entre la saillie et le plan de la surface intérieure de la partie de corps sur un côté de la saillie faisant face à l'extrémité arrière (12) de l'élément de soulagement de traction.

4. Accessoire d'installation électrique selon l'une quelconque des revendications 1 à 3, dans lequel l'accessoire d'installation électrique (100, 120, 130) est un boîtier d'installation électrique, un embout séparé, ou un manchon.
